# EUROPEAN PATENT APPLICATION

(11) **EP 2 698 994 A2**
(43) Date of publication of application: **19.02.2014**
(21) Application number: 12771408.7
(22) Date of filing: 16.04.2012
(51) Int. Cl.: H04N 7/24

(54) **ADAPTIVE VIDEO TRANSCODING METHOD AND SYSTEM**

(30) Priority: 15.04.2011 KR 20110035112
(71) Applicant: SK Planet Co., Ltd., Seoul 100-999 (KR)
(72) Inventor: BAE, Tae Meon, Seoul 138-220 (KR)
(74) Representative: Thorniley, Peter
(86) International application number: PCT/KR2012/002862
(87) International publication number: WO 2012/141552

(57) **Abstract**

The present invention relates an adaptive video transcoding method and system, the method and the system for considering an available network bandwidth, a characteristic of a video, and a calculated load of a server, and adaptively controlling an encoding option of a transcoder, when carrying out a video transcoding such as a decoding of a video and video editing, and an encoding process, so as to enable a transcoding of a maximum number of videos in a limited environment. The adaptive video transcoding system according to the present invention comprises: a video transcoding device for calculating a minimum required compression rate required by a measured streamable bandwidth, selecting, as a transcoding encoding option, each of encoding options making up an encoding option combination with the lowest CPU usage rate of when at least one encoding option, from an encoding option combination having a greater compression rate of when at least one encoding option is combined and encoded, than the minimum required compression rate, is combined and encoded, and using the selected transcoding encoding option to transcode and transmit the video contents to a user terminal; and a user terminal for receiving and displaying the video contents transcoded according to the transcoding encoding option from the video transcoding device.

## Description

### [Technical Field]

The present invention relates to a video transcoding method and system, which encode video content again in real time and transmit the re-encoded video content when transmitting video content to a user terminal over a network and, more particularly, to transcoding a maximum number of videos in a limited environment by adaptively controlling an encoding option of a transcoder when performing video transcoding, such as the decoding of a video, the edit of a video, and an encoding process.

### [Background Art]

In order to provide N screen service for a lot of pieces of video content that are produced by various content providers and provided to the Internet, encoding parameters and methods including the codec of content, a file type, the resolution of a video, a frame rate, etc. need to be encoded again suitably for a user terminal and a network environment and then to be provided.

In order to solve this, a service provider includes a real-time video transcoding server, encodes a video again according to the terminal of a user, and transmits the encoded video to a user terminal over a network.

The capacity of the real-time video transcoding server can be determined depending on how many videos can be transcoded at the same time.

However, video transcoding includes the decoding of a video, the edit of a video, and an encoding process. In particular, the video encoding process is problematic in that operation performance of a video transcoding server in transcoding a large number of videos is limited because the video encoding process requires a great computational load.

### [Disclosure]

### [Technical Problem]

An object of the present invention for solving the aforementioned disadvantage is to provide an adaptive video transcoding method and system, which can transcode a maximum number of videos in a limited environment by adaptively controlling an encoding option of a transcoder with consideration taken of an available network bandwidth of a user, the characteristics of a video, and a computational load of a server when performing video transcoding, such as the decoding of a video, the edit of a video, and an encoding process.

### [Technical Solution]

In accordance with an aspect of the present invention for achieving the object, there is provided an adaptive video transcoding system, including a video transcoding device for calculating a minimum compression rate required by a measured streamable bandwidth, selecting, as a transcoding encoding option, an encoding option that forms an encoding option combination having the lowest CPU usage rate when one or more of encoding option combinations, each having a higher compression rate than the minimum compression rate when one or more encoding options are combined and encoded, are combined and encoded, transcoding video content using the selected transcoding encoding option, and transmitting the transcoded video content to a user terminal and the user terminal for receiving the video content, transcoded according to the transcoding encoding option, from the video transcoding device and displaying the received video content.

Meanwhile, in accordance with another aspect of the present invention for achieving the object, there is provided a video transcoding device, including a communication unit for communicating with a user terminal over a communication network, a transcoding environment analysis unit for measuring a CPU usage rate and an available streaming bandwidth, an information storage unit for previously measuring and storing a compression rate and a CPU usage rate for each encoding option in relation to at least one encoding option, an encoding option determination unit for calculating a minimum compression rate from the available streaming bandwidth and a compression rate and a CPU usage rate when the encoding options are combined and encoded, and selecting an encoding option that forms an encoding option combination having the lowest CPU usage rate from encoding option combinations each having a higher compression rate than the minimum compression rate when the encoding options are combined and encoded as a transcoding encoding option, and a transcoding unit for transcoding video using the selected transcoding encoding option and transmitting the transcoded video to a user terminal.

Here, the at least one encoding option includes at least one of CABAC/CAVLC, constant QP/adaptive QP rate control, and whether a B frame is used or not.

Furthermore, the encoding option determination unit may calculate a minimum compression rate from the measured streamable bandwidth, calculate a CPU usage rate for each combination by combining the encoding options, and determine an encoding option combination having a higher compression rate than the required compression rate and the lowest CPU usage, from among the combinations, to be the encoding option.

Furthermore, the encoding option determination unit may generate eight encoding option combinations by combining three encoding options including CABAC/CAVLC, constant QP/adaptive QP rate control, and whether a B frame is used or not and determine an encoding option that forms an encoding option combination having the lowest CPU usage, from among encoding option combinations, each having a higher compression rate than the minimum compression rate, from among the eight combinations, to be the transcoding encoding option.

Meanwhile, in accordance with yet another aspect of the present invention for achieving the object, there is provided an adaptive video transcoding method of a transcoding device which communicates with a user terminal over a communication network, including the steps of (a) measuring a CPU usage rate of the device and a current available streaming bandwidth, (b) calculating a minimum compression rate required by the available streaming bandwidth, calculating a minimum compression rate from the measured streamable bandwidth in relation to an encoding option that satisfies the minimum compression rate, calculating a CPU usage rate for each combination by combining the encoding options, and determining an encoding option combination having a higher compression rate than the required compression rate and the lowest CPU usage, from among the combinations, to be an encoding option, and (c) transcoding video content according to the determined encoding option.

Furthermore, the step (a) includes storing the measured streamable bandwidth and a compression rate and a CPU usage rate for each option which have been previously measured.

Furthermore, the encoding option includes CABAC/CAVLC, constant QP/adaptive QP rate control, and whether a B frame is used or not.

Furthermore, the step (b) may include generating eight encoding combinations by combining three encoding options comprising CABAC/CAVLC, constant QP/adaptive QP rate control, and whether a B frame is used or not and determining an encoding option combination having a higher compression rate than the required compression rate and the lowest CPU usage, from among the eight combinations, to be the encoding option.

Furthermore, the step (c) may include transmitting the video content transcoded according to the determined encoding option to the user terminal.

### [Advantageous Effects]

In accordance with the present invention, an encoding option of a transcoder can be adaptively determined by taking an available network bandwidth of a user and a computational load of a server into consideration.

Furthermore, a maximum number of videos can be transcoded under operation capabilities of a limited server.

Furthermore, a video transcoded according to an encoding option into which a computational load of a server is incorporated can be transmitted to a user terminal.

### [Description of Drawings]

FIG. 1 is a construction schematically showing the general construction of an adaptive video transcoding system in accordance with an embodiment of the present invention.
FIG. 2 is a construction schematically showing the function blocks of a video transcoding device in accordance with an embodiment of the present invention.
FIG. 3 is an operation flowchart illustrating an adaptive video transcoding method of the transcoding device in accordance with an embodiment of the present invention.

### [Mode for Invention]

Details of the object, technical construction, and operational effects of the present invention will be more clearly understood from the following detailed description based on the accompanying drawings attached to the specification of the present invention. Hereinafter, embodiments of the present invention are described in detail with reference to the accompanying drawings.

Multimedia transcoding technology enables seamless and stable service by reconfiguring a single piece of content (one source) into content optimized for a user environment actively in response to the characteristics of various user networks and terminals and providing the reconfigured content (i.e., multi-use). That is, multimedia transcoding technology is one of core techniques capable of supporting and solving a ubiquitous computing environment that is directed to any network, any device, and any content in such a way as to output a single piece of content through various types of networks and terminals.

In the future Internet environment, it is expected that different multimedia compression methods will coexist in addition to a situation where various types of networks and user terminals are present together. Accordingly, content in which a large number of use environments have been reflected can be combined.

Accordingly, it is necessary to provide a function that enables a single piece of content to be used in various environments having different performances and characteristics, such as different networks, resolutions, processor performances, and user interface.

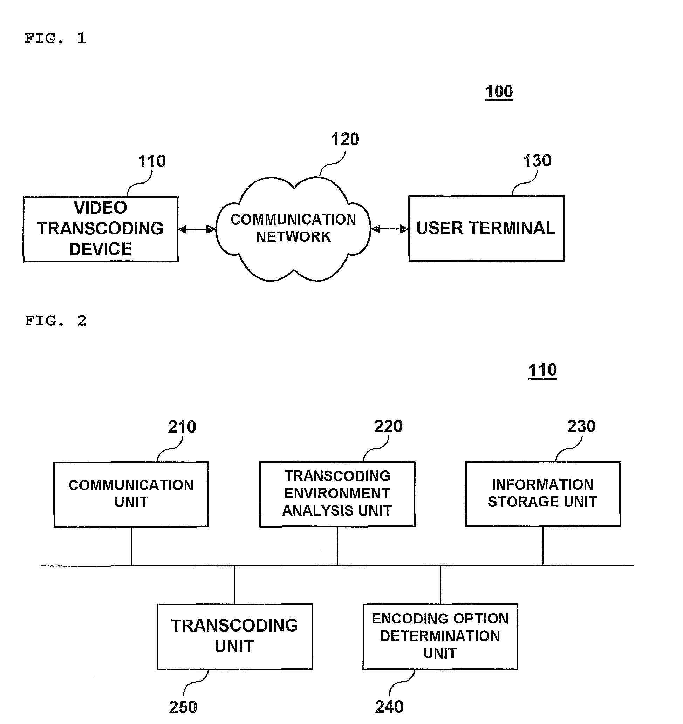

FIG. 1 is a construction schematically showing the general construction of an adaptive video transcoding system in accordance with an embodiment of the present invention.

Referring to FIG. 1, the adaptive video transcoding system 100 according to the present invention includes a video transcoding device 110, a communication network 120, a user terminal 130, and so on.

The video transcoding device 110 measures a CPU usage rate and a current available streaming bandwidth of the device, calculates a minimum compression rate required by the available streaming bandwidth, determines an encoding option for satisfying the minimum compression rate, transcodes video content using the determined encoding option, and transmits the transcoded video content to the user terminal.

Here, the video transcoding device 110 can be a media server or the like for transcoding the original compression video and transmitting the transcoded video to the one or more user terminals 130 and can be a dedicated media device or the like capable of receiving the original compression video, transcoding the original compression video, and multicasting the transcoded video over the communication network 120.

The communication network 120 provides a transport path along which a video is transmitted from the video transcoding device 110 to the user terminal 130 and provides an access path along which the user terminal 130 accesses the video transcoding server 110. Here, the communication network 120 includes mobile communication networks, such as WCDMA, HDPA, 3G, and 4G, local area communication networks, such as Bluetooth, Zigbee, and Wi-Fi, and a wired communication network, such as the Internet or a PSTN.

The user terminal 130 receives video content, transcoded according to an encoding option, from the video transcoding device and displays the received video content.

That is, the user terminal 130 transmits video resolution, an available bandwidth, a frame rate, and a codec list to the video transcoding server 110. Thereafter, the user terminal 130 receives a video, transcoded from the original compression video, from the video transcoding server 110 and displays the receive video.

Here, the user terminal 130 can be IPTV, a settop box or the like which can receive video data from the video transcoding server 110 and display the received video data and can also be a smart phone, a mobile communication terminal or the like through which a user can play back and watch video data while moving.

FIG. 2 is a construction schematically showing the function blocks of the video transcoding device in accordance with an embodiment of the present invention.

Referring to FIG. 2, the video transcoding device 110 according to the present invention includes a communication unit 210, a transcoding environment analysis unit 220, an information storage unit 230, an encoding option determination unit 240, a transcoding unit 250, and so on.

The communication unit 210 communicates with the user terminal 130 over the communication network 120.

The transcoding environment analysis unit 220 measures a CPU usage rate and a current available streaming bandwidth of the device.

The information storage unit 230 stores a measured streamable bandwidth and a compression rate and a CPU usage rate for each option which have been previously measure.

The encoding option determination unit 240 calculates a minimum compression rate required by an available streaming bandwidth and determines an encoding option for satisfying the minimum compression rate.

Here, the encoding option includes Context Adaptive Binary Arithmetic Coding (CABAC)/Context Adaptive Variable Length Coding (CAVLC), constant QP/adaptive QP rate control, whether a B frame is used or not, and so on. CABAC/CAVLC is a loseless compression method that utilizes a probabilistic method of information. CABAC having high compression performance has a high compression rate because it switches a probabilistic distribution adaptively determined according to context, but has a great computational load. In contrast, CAVLC is a method of applying a context adaptive method to existing Variable Length Coding (VLC), and CAVLC has a smaller computational load than CABAC. Accordingly, the trade-off of a compression rate and a computational load is made possible by selecting one option of CABAC and CAVLC.

Furthermore, constant QP/adaptive QP rate control is a method of controlling the amount of data, that is, compression results, upon compression, and constant QP is a method of controlling QP, that is, a quantization coefficient, by inputting QP to all videos as a constant value. In contrast, adaptive QP is a method of controlling the amount of data while continuing to change a QP value. Accordingly, the constant QP method has a smaller computational load and a lower compression rate than the method using adaptive QP.

Furthermore, a B frame has a high compression rate, but is a method that requires a very great computational load because the B frame requires motion prediction twice or more than a P frame. One of the two methods (i.e., CAVAC/CAVLC and constant QP/adaptive QP) can be selected, or the compression method (B frame) that does not need to be necessarily executed can be selected or excluded if an encoding computational load can be reduced within a range that satisfies a given compression rate.

Furthermore, the encoding option determination unit 240 can calculate a minimum compression rate required by a measured streamable bandwidth, calculate a CPU usage rate for each combination by combining encoding options, and determine an encoding option combination having a higher compression rate than the required minimum compression rate and the lowest CPU usage, from among combinations, to be an encoding option.

Furthermore, the encoding option determination unit 240 can generate eight encoding combinations by combining three encoding options including CABAC/CAVLC, constant QP/adaptive QP rate control, and whether a B frame is used or not and determine an encoding option combination having a higher compression rate than the required compression rate and the lowest CPU usage, from among the eight combinations, to be an encoding option.

For example, assuming that a required minimum compression rate is 7 Mbps, if a CPU usage rate and a compression rate for each combination are calculated from an available streaming bandwidth in which data is now transmitted in relation to each of eight combinations of encoding options, a method of the video transcoding device selecting an encoding option, such as that of Table 1, is as follows.

**[Table 1]**

| | Compression rate | Computational load |
|---|---|---|
| (First combination) CABAC, constant QP, B frame used | 6.8 Mbps | 40% |
| (Second combination) CABAC, constant QP, B frame not used | 6.4 Mbps | 38% |
| (Third combination) CABAC, adaptive QP, B frame used | 8 Mbps | 52% |
| (Fourth combination) CABAC, adaptive QP, B frame not used | 7.4 Mbps | 48% |
| (Fifth combination) CAVLC, constant QP, B frame used | 7.2 Mbps | 46% |
| (Sixth combination) CAVLC, constant QP, B frame not used | 5.2 Mbps | 30% |
| (Seventh combination) CAVLC, adaptive QP, B frame used | 6.4 Mbps | 38% |
| (Eighth combination) CAVLC, adaptive QP, B frame not used | 6.0 Mbps | 34% |

The third combination, the fourth combination, and the fifth combination each having a minimum compression rate of 7 Mbps or more can be selected from the encoding option combinations. The fifth combination, that is, an encoding option combination having the lowest CPU usage, can be selected from the three combinations as an encoding option for the video transcoding device. Video content can be transcoded according to the encoding option and then transmitted to the user terminal.

The transcoding unit 250 transcodes video using the determined encoding option and transmits the transcoded video to the user terminal 130.

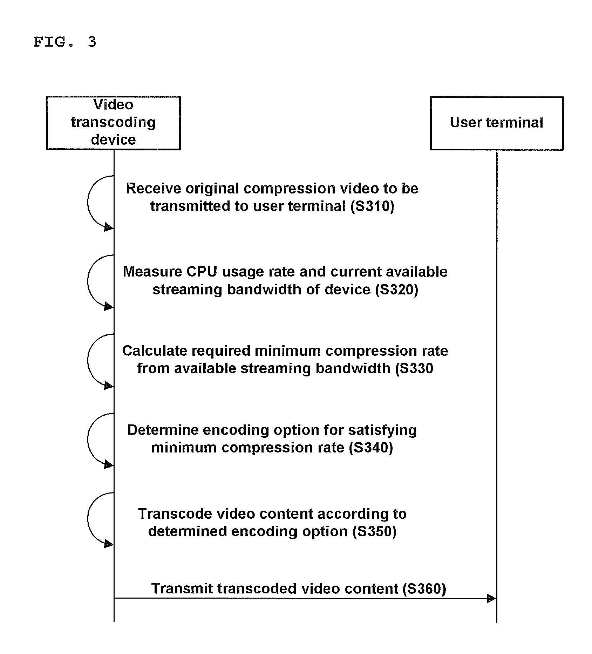

FIG. 3 is an operation flowchart illustrating an adaptive video transcoding method of the transcoding device in accordance with an embodiment of the present invention.

Referring to FIG. 3, the video transcoding device 110 according to the present invention first receives the original compression video to be transmitted to the user terminal 130 (S310).

Next, the video transcoding device 110 measures a CPU usage rate and a current available streaming bandwidth of the device (S320).

Here, the video transcoding device 110 stores the measured streamable bandwidth and a compression rate and a CPU usage rate for each option which have been previously measured in the information storage unit 230.

Here, the encoding option includes CABAC/CAVLC, constant QP/adaptive QP rate control, whether a B frame is used or not, and so on.

Next, the video transcoding device 110 calculates a minimum compression rate required by an available streaming bandwidth (S330).

Next, the video transcoding device 110 determines an encoding option for satisfying the minimum compression rate (S340).

Here, the video transcoding device 110 can calculate a minimum compression rate from the measured streamable bandwidth, calculate a CPU usage rate for each combination by combining the encoding options, and determine an encoding option combination having a higher compression rate than the required compression rate and the lowest CPU usage, from among the combinations, to be the encoding option.

Furthermore, the video transcoding device 110 can generate eight encoding combinations by combining three encoding options including CABAC/CAVLC, constant QP/adaptive QP rate control, and whether a B frame is used or not and determine an encoding option combination having a higher compression rate than the required compression rate and the lowest CPU usage, from among the eight combinations, to be the encoding option.

Next, the video transcoding device 110 transcodes video content according to the determined encoding option (S350).

Furthermore, the video transcoding device 110 transmits the video content, transcoded according to the determined encoding option, to the user terminal 130 over the communication network 120 (S360).

As described above, in accordance with the present invention, an adaptive video transcoding method and system in which a maximum number of videos can be transcoded in a limited environment by adaptively controlling an encoding option of a transcoder with consideration taken of an available network bandwidth of a user, the characteristics of a video, and a computational load of a server when performing video transcoding, such as the decoding of a video, the edit of a video, and an encoding process can be realized.

Those skilled in the art to which the present invention pertains will understand that the present invention may be implemented in other various forms without departing from the technical spirit or essential characteristics of the present invention. Accordingly, the aforementioned embodiments should not be construed as being limitative, but should be construed as being only illustrative from all aspects. The scope of the present invention is disclosed in the appended claims rather than the detailed description. It should be understood that all modifications or variations derived from the meanings and scope of the present invention and equivalents thereof are included in the scope of the appended claims.

### [Industrial Applicability]

The present invention can be applied to a device or system for transmitting video content over a network and can be applied to video transcoding techniques for encoding video content again in real time and transmitting the encoded video content.

## Claims

1. An adaptive video transcoding system, comprising:
a video transcoding device for calculating a minimum compression rate required by a measured streamable bandwidth, selecting, as a transcoding encoding option, an encoding option that forms an encoding option combination having a lowest CPU usage rate when one or more of encoding option combinations, each having a higher compression rate than the minimum compression rate when one or more encoding options are combined and encoded, are combined and encoded, transcoding video content using the selected transcoding encoding option, and transmitting the transcoded video content to a user terminal; and
the user terminal for receiving the video content, transcoded according to the transcoding encoding option, from the video transcoding device and displaying the received video content.

2. A video transcoding device, comprising:
a communication unit for communicating with a user terminal over a communication network;
a transcoding environment analysis unit for measuring a CPU usage rate and an available streaming bandwidth;
an information storage unit for previously measuring and storing a compression rate and a CPU usage rate for each encoding option in relation to at least one encoding option;
an encoding option determination unit for calculating a minimum compression rate from the available streaming bandwidth and a compression rate and a CPU usage rate when the encoding options are combined and encoded, and selecting an encoding option that forms an encoding option combination having a lowest CPU usage rate from encoding option combinations each having a higher compression rate than the minimum compression rate when the encoding options are combined and encoded as a transcoding encoding option; and
a transcoding unit for transcoding video using the selected transcoding encoding option and transmitting the transcoded video to a user terminal.

3. The video transcoding device of claim 2, wherein the at least one encoding option comprises at least one of CABAC/CAVLC, constant QP/adaptive QP rate control, and whether a B frame is used or not.

4. The video transcoding device of claim 2, wherein the encoding option determination unit generates eight encoding option combinations by combining three encoding options including CABAC/CAVLC, constant QP/adaptive QP rate control, and whether a B frame is used or not and selects an encoding option that forms an encoding option combination having a lowest CPU usage, from among encoding option combinations, each having a higher compression rate than the minimum compression rate, from among the eight combinations, as the transcoding encoding option.

5. An adaptive video transcoding method of a transcoding device which communicates with a user terminal over a communication network, the adaptive video transcoding method comprising steps of:
(a) measuring a CPU usage rate of the device and a current available streaming bandwidth;
(b) calculating a minimum compression rate required by the available streaming bandwidth, calculating a minimum compression rate from the measured streamable bandwidth in relation to an encoding option that satisfies the minimum compression rate, calculating a CPU usage rate for each combination by combining the encoding options, and determining an encoding option combination having a higher compression rate than the required compression rate and a lowest CPU usage, from among the combinations, to be an encoding option; and
(c) transcoding video content according to the determined encoding option.

6. The adaptive video transcoding method of claim 5, wherein the step (a) comprises storing the measured streamable bandwidth and a compression rate and a CPU usage rate for each option which have been previously measured.

7. The adaptive video transcoding method of claim 5, wherein the encoding option comprises CABAC/CAVLC, constant QP/adaptive QP rate control, and whether a B frame is used or not.

8. The adaptive video transcoding method of claim 5, wherein the step (b) comprises generating eight encoding combinations by combining three encoding options comprising CABAC/CAVLC, constant QP/adaptive QP rate control, and whether a B frame is used or not and determining an encoding option combination having a higher compression rate than the required compression rate and a lowest CPU usage, from among the eight combinations, to be the encoding option.

9. The adaptive video transcoding method of claim 5, wherein the step (c) comprises transmitting the video content transcoded according to the determined encoding option to the user terminal.
